**Europäisches Patentamt**

**European Patent Office**

**Office européen des brevets**

(11) Publication number: **0 249 267 B1**

(12) **EUROPEAN PATENT SPECIFICATION**

(45) Date of publication of patent specification: **08.09.93**   (51) Int. Cl.⁵: **G01N 17/00**

(21) Application number: **87200965.9**

(22) Date of filing: **21.05.87**

(54) **Electrochemical sensor for the measurement of corrosion in metal equipment.**

(30) Priority: **11.06.86 IT 2075586**

(43) Date of publication of application:
**16.12.87 Bulletin  87/51**

(45) Publication of the grant of the patent:
**08.09.93 Bulletin  93/36**

(84) Designated Contracting States:
**AT BE CH DE ES FR GB GR LI LU NL SE**

(56) References cited:
**GB-A- 1 016 361**
**GB-A- 2 006 437**

**PATENT ABSTRACTS OF JAPAN, vol. 6, no. 22 (P-101)[900], 9th February 1982; & JP-A-56 145 331**

(73) Proprietor: **ENIRICERCHE S.p.A.**
**Corso Venezia 16**
**I-20121 Milan(IT)**

(72) Inventor: **Civardi, Giuseppe**
**Stradone Farnese 75**
**I-29100 Piacenza(IT)**
Inventor: **Di Liberto, Sebastiano**
**Via Dei Mille 38**
**I-20097 San Donato Milanese Milan(IT)**
Inventor: **Rivola, Luigi**
**Via Moro 21**
**I-20097 San Donato Milanese Milan(IT)**

(74) Representative: **Roggero, Sergio et al**
**Ing. Barzanò & Zanardo Milano S.p.A. Via Borgonuovo 10**
**I-20121 Milano (IT)**

# Description

This invention relates to an electrochemical method, and a sensor performing such method, for measuring the corrosion in a metal equipment.

More particularly, this invention is directed to measuring diffused corrosion, forecasting and spotting local corrosion forms on metal equipments which contain corrosive fluids.

The remotest prior art taught to determine the rate of corrosion of a metal surface by using changes in the electrical resistance of a test probe to estimate changes in thickness and hence the corrosion rate.

A more recent approach, such as GB-A-1 016 361, provides a method of testing the rate of corrosion of a metal in a corrosive liquid environment, by measuring the polarization resistance, in which method an electric current is passed through a cell comprising a first electrode made of the metal the rate of corrosion of which is to be tested, a second electrode, which serves as a current supply electrode, and the corrosive liquid environment, the change in electrode potential of the metal under test being measured in comparison with a reference electrode placed in the corrosive liquid environment.

GB-A-2 006 437 discloses a method for evaluating the corrosion rate of a metal test piece on the basis of the anodic and cathodic Tafel slopes wherefrom the corrosion current density is obtained, and, based on the corrosion current density, it is possible to calculate the corrosion rate.

The main drawback of the prior art approaches is that they are silent about local corrosion and stress corrosion.

Moreover, the methods based on the Tafel slopes give average corrosion rate values, which are inaccurate if the corrosion rate is low, and the values of the impressed currents are usually disturbing since they may introduce alteration on the specimens' surfaces.

With a view to offsetting the defects of the prior art approaches, this invention provides a:

Method of measuring the corrosion rate of a metal equipment, by testing, for the presence of local corrosions, a specimen of the same metal as that of the equipment being tested with a testing assembly comprising a testing electrode, a reference electrode and a counter electrode and by discretely determining the anodic and cathodic currents, comprising the steps of reading out first the value of the cathodic current impressed to the specimen and then the value of the anodic current impressed thereto, the cathodic and the anodic current, respectively, being impressed to the specimen, inserted into an opening formed through the equipment to be tested, progressively with a logarithmic trend, with progression times of 30 s to 10 min, the anodic polarization never exceeding 200 mV, the corrosion rate, in millimetres yearly, being calculated with the relationship:

$$P = \frac{AW\ 3{,}268.10^{-3}\ I\,k}{de}$$

wherein:
AW is the atomic weight of the metal of the specimen, e is the number of electrons involved in the metal dissolution process, d is the metal density in $g/cm^3$, and I.k is the exchange current, in $\mu A/cm^2$, calculated with the relationship:

$$\frac{Ia.Ic}{Ia+Ic}$$

wherein Ia and Ic are the densities of the periodically impressed anodic and cathodic currents, respectively.

According to another of its aspects, the present invention also provides an electrochemical sensor for measuring corrosion in a metal equipment with the method as claimed in Claim 1, of the kind comprising a specimen of the same metal as that of the equipment to be tested, a reference electrode and a counter-electrode, said reference electrode being secured to a wire conductor embedded in a mass of insulating material and the specimen and the counter electrode being connected to a DC generator, characterized in that a tubular testing electrode being of the same metal as that of the equipment is arranged such that said wire conductor is contained therein; said counter electrode extends inside and along said tubular testing electrode and is electrically insulated from the remaining electrodes; said specimen is an oval shaped ring being both mechanically and electrically connected to said tubular testing electrode; said reference electrode is positioned in the vicinity of the bottom portion of the oval ring specimen; said DC generator is equipped with means for providing first a cathodic, and then an anodic current with a logarithmic trend, and in that the specimen and the reference electrode are connected to an electrometer capable of detecting polarization potentials.

The electrochemical sensor according to the present invention comprises a specimen having an ovalized ring shape, made of the same material as that of the equipment to be checked; a tubular electrode (of the same material as the specimen), having any appropriate cross-section area, and electrically connected with the specimen in correspondence of any portion thereof; in particular, in correspondence of its outer cylindrical surface; a reference electrode selected from (solid) Ag/AgCl, platinum, platinum-coated titanium, zirconium, iridium, osmium, gold, graphite, ruthenium oxide-coated titanium, palladium; a counter-electrode selected from the above-said materials, with the Ag/AgCl couples being excluded.

The selection of the particular materials is a function of the chemical compatibility with its surrounding environment, on considering that the reference electrode and the counter-electrode should remain unaltered.

In the sensor of the invention, the specimen is connected with the tubular electrode; the reference electrode extends along the tubular electrode and is electrically insulated from it, up to reach the interior of the specimen; the counter-electrode extends, too, along the tubular electrode, and is electrically insulated from the other electrodes.

The counter-electrode and the reference electrode, obviously, do not touch the specimen, and inside the tubular electrode, they are electrically insulated from each other and from the tubular electrode, in particular by means of insulating resins, which occupy the residual free space in the tubular electrode's inner cross section, and guarantee the mechanical stability and the tightness thereof.

The sensor with the above-said elements is inserted through an opening inside the equipment the corrosion has to be measured of, said sensor being electrically insulated from said equipment.

Once that the sensor is inserted, to the specimen first a cathodic current and then an anodic current is sent. Thus, the polarization potentials are detected.

The behaviour of the potentials is recorded on a semilogarithmic chart and the densities of the turning cathodic current (Ic) and of the turning anodic (Ia) current are respectively evidenced. The currents are fed according to discrete values, with a logarithmic trend, with progression times ranging from 30 seconds up to 10 minutes.

From Ic and Ia values, the value of exchange current (Ik) is computed, according to the equation:

$$Ik = \frac{Ia.Ic}{Ia + Ic}$$

From Ik value, by knowing the density (d) of the metal material, the number of electrons involved in the reaction of metal dissolution, and the atomic weight of the same material (A.W.), the corrosion rate can be computed, expressed as the average penetration as mm/year, by using the following equation:

$$P = \frac{A.W.}{d \cdot e} \times 3.268.10^{-3} \times Ik$$

wherein:

| | |
|---|---|
| P = | penetration, mm/year; |
| A.W. = | atomic weight of the metal; |
| e = | number of electrons involved in the metal dissolution reaction; |
| d = | metal density, as $g/cm^3$; |
| Ik = | exchange current, as $\mu A/cm^2$. |

As for carbon steel, inasmuch as its density is of 7.86 $g/cm^3$, and by considering that the number of electrons involved in the metal dissolution process is 2, the value of the fraction:

$$\frac{AW \times 3.268.10^{-3}}{d \cdot e}$$

is 0,0116.

By periodically detecting the cathodic and anodic polarization curves, it is thus possible to learn the trend of the corrosion rate over time, without the specimen having to be removed from the test cell, and hence without the surface conditions having to be modified.

To the purpose of preventing perturbating effects, the anodic polarization is kept controlled within the range lower than 200 mV.

The presence of local corrosions with trend to cracking development is evidenced by sudden drops in the polarized anodic potentials in correspondence of each discrete increase in anodic current.

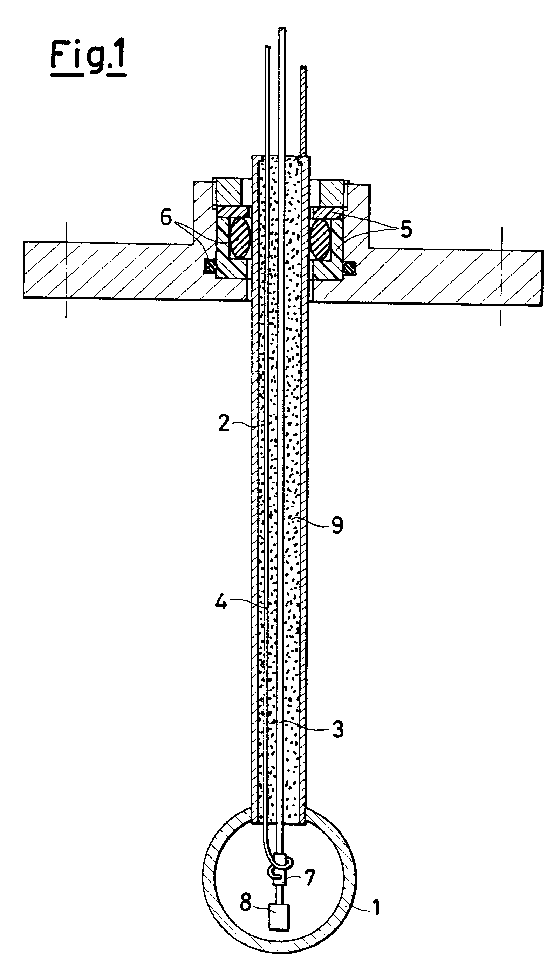

The discrete increase in anodic current can be performed manually, or it can be programmed. The sensor of the invention is illustrated in particular in the hereto attached Figure 1 (not to be considered as limitative), wherein there are evidenced: with 1, the specimen; with 2, the tubular electrode (in the specific case, of stainless steel), which, in particular, can be coated on its outer surface by a polymeric film compatible with the fluid the sensor is in contact with; with 3, a silver wire leading to the reference electrode 8 of Ag/AgCl or Pt; with 4, the counter-electrode (of platinum in the specified case); with 5, the material electrically insulating the sensor from the vessel; with 6, ring-shaped seal gaskets; with 7, a small tube of insulating ceramic; with 9, an insulating resin, in particular, TECNOVIT 4000®.

1 (via 2) and 4 are connected with a d.c. power generator, and at the same time the specimen 1, together with the electrode 8, is connected with an electrometer for the measurement of the potentials.

The dimensions of the individual components of the sensor are not critical, with the only condition that they must fit to the equipment the sensor is to be applied to.

It is important to observe that the sensor according to the present invention can operate at temperatures of up to 500°C and under pressures of up to 295,21 bar (300 abs.atm).

The sensor of the present invention allows also spontaneous (not polarized) potentials to be measured (with no current supply).

The determination of said spontaneous potentials is particularly useful for the detection of the areas under danger of corrosion with trend to cracking development.

The invention is now illustrated with the aid of the following Examples, which supply non-limitative practical embodiments thereof.

EXAMPLE 1

A sensor was prepared, which consisted of:

1) a specimen of AISI 304 stainless steel formed by a ring having an inner diameter of 30 mm, of 2 mm of thickness, mechanically ovalized and having in its interior, on it cylindrical face, a welding bead of AISI 304, the aim of which was to reproduce the actual plant conditions.

2) a tubular electrode of AISI 304, externally insulated with teflon, having an outer diameter of 10 mm, a wall thickness of 1 mm, and a length of 100 mm, said electrode being connected with the specimen by screwing down into a bore provided on the specimen.

3) a reference electrode, constituted by Ag/AgCl, positioned in the nearby of the bottom portion of the ring, of 4 mm of diameter and 4 mm of height; the reference electrode was obtained by impregnating an Ag net, with 1-mm meshes, with molten AgCl, and submitting the same electrode to an electrochemical conditioning, as hereunder disclosed: 1-hour cathodic treatment in a 3.5% aqueous solution of NaCl, under a cathodic current of 20 mA/cm$^2$; the reference electrode is connected with the output terminal via a silver wire running inside the tubular electrode.

4) a counter-electrode constituted by a 1-mm Pt wire wound around the ceramic insulator of the silver wire of the reference electrode.

5) the insulating material inside the tubular electrode, of epoxy resin.

The sensor was used for monitoring the corrosion in a reactor of AISI 304 operating at 120°C and under 5 kg/cm$^2$ in a polar solvent (acetone) containing 6.3% of water and an amount of 10 ppm of HCl.

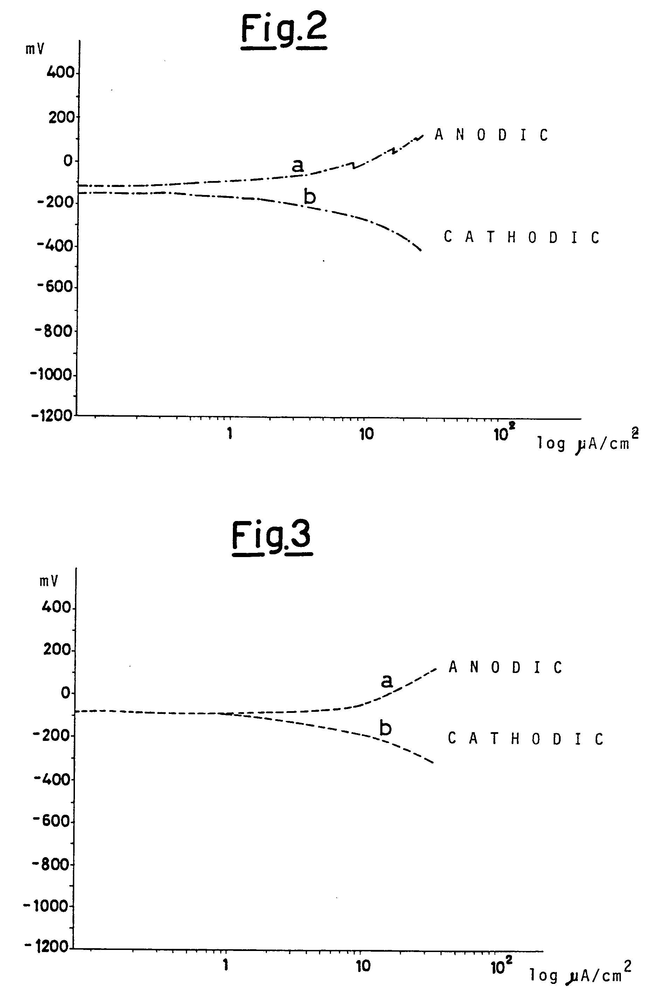

In Figure 2 (abscissae: logarithm of current density, as $\mu A/cm^2$; ordinates: potentials, as mV) the anodic polarogram ("a" curve) and the cathodic polarogram ("b" curve) are reported, from which an Ik of 1.89 $\mu A/cm^2$ and an average penetration rate of corrosion of 0.022 mm/year emerge. The current increases were performed every 5 minutes.

The anodic polarogram has a segmented shape, which indicates the formation of pittings and/or cracks also evidenced by a subsequent non-destructive examination carried out on the reactor and on the specimen.

EXAMPLE 2

The same sensor of Example 1 was used under the same operating conditions, with the only difference that an inhibitor was added (150 ppm of polyphosphoric acid + 75 ppm of triethanolamine).

The results obtained are reported in Figure 3, which shows an at all similar behaviour as of former case. The abscissae and the ordinates indicate the same quantities of Figure 2. Due to the presence of the inhibitor, the anodic curve does not have a segmented shape and the subsequent analysis on the specimen did not show transgranular cracks.

EXAMPLE 3

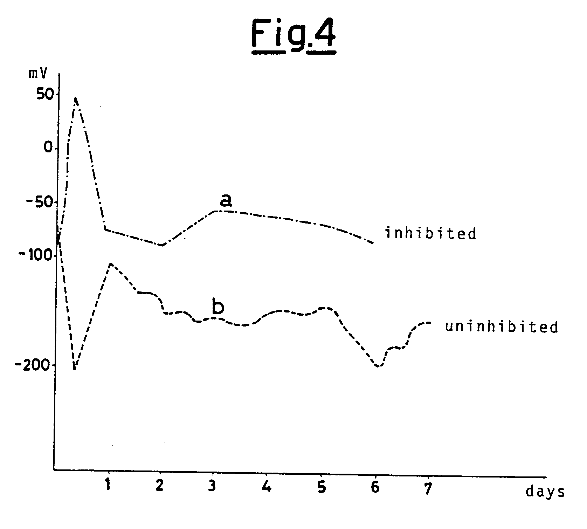

The trend of the spontaneous potential was monitored by using the sensor as previously described in Example 1. The results are reported in Figure 4, which shows, on the abscissae, the times as days, and on the ordinated, the potentials as mV.

Curve (a) represents the plot of the specimen potential in an inhibited solution, as in Example 2, and curve (b) represents the plot of potential in the absence of inhibitors, as in Example 1.

**Claims**

1. Method of measuring the corrosion rate of a metal equipment, by testing, for the presence of local corrosions, a specimen of the same metal as that of the equipment being tested with a testing assembly comprising a testing electrode, a reference electrode and a counter electrode and by discretely determining the anodic and cathodic currents, comprising the steps of reading out first the value of the cathodic current impressed to the specimen and then the value of the anodic current impressed thereto, the cathodic and the anodic current, respectively, being impressed to the specimen, inserted into an opening formed through the equipment to be tested, progressively with a logarithmic trend, with progression times of 30 s to 10 min, the anodic polarization never exceeding 200 mV, the corrosion rate, in millimetres yearly, being calculated with the relationship:

$$P = \frac{AW\ 3,268.10^{-3}\ I\ k}{de}$$

wherein:

AW is the atomic weight of the metal of the specimen, $e$ is the number of electrons involved in the metal dissolution process, $d$ is the metal density in $g/cm^3$, and $I.k$ is the exchange current, in $\mu A/cm^2$, calculated with the relationship:

$$\frac{Ia.Ic}{Ia+Ic}$$

wherein $Ia$ and $Ic$ are the densities of the periodically impressed anodic and cathodic currents, respectively.

2. An electrochemical sensor for measuring corrosion in a metal equipment with the method as claimed in Claim 1, of the kind comprising a specimen (1) of the same metal as that of the equipment to be tested, a reference electrode (8) and a counter-electrode (4), said reference electrode (8) being secured to a wire conductor (3) embedded in a mass of insulating material and the specimen (1) and the counter electrode (4) being connected to a DC generator, characterized in that a tubular testing electrode (2) being of the same metal as that of the equipment is arranged such that said wire conductor (3) is contained therein; said counter electrode (4) extends inside and along said tubular testing electrode (2) and is electrically insulated from the remaining electrodes; said specimen (1) is an oval shaped ring being both mechanically and electrically connected to said tubular testing electrode; said reference electrode (8) is positioned in the vicinity of the bottom portion of the oval ring specimen; said DC generator is equipped with means for providing first a cathodic, and then an anodic current with a logarithmic trend, and in that the specimen (1) and the reference electrode (8) are connected to an electrometer capable of detecting polarization potentials.

3. Electrochemical sensor according to Claim 2, wherein the metal for the reference electrode (8) is selected from Ag/solid-state-AgCl, Pt, Pt-coated Ti, Zr, In, Os, Au, graphite, Ruthenium-oxide-coated Ti and Pd.

4. Electrochemical sensor according to Claim 2, wherein the reference electrode (8) is an Ag wire net impregnated with molten AgCl and its wire conductor is an Ag wire (3).

5. Electrochemical sensor according to Claim 2, wherein the material for the counter electrode (4) is selected from Pt, Pt-coated Ti, Zr, In, Os, Au, graphite, Ruthenium-oxide-coated Ti and Pd.

6. Electrochemical sensor according to Claim 2, wherein the counter electrode ((4) is a Pt wire.

7. Electrochemical sensor according to Claim 2, wherein the end portion of the counter electrode (4) is helically wound around an insulator (7) surrounding the end portion of the conductor wire (3) directly electrically connected to said reference electrode (8).

8. Use of the sensor as defined in Claim 2, for measuring, without impressing any current to said sensor, the spontaneous potentials, indicative of the presence of corrosion danger, as developed in the specimen first immersed in an inhibited solution, and then in an uninhibited solution.

**Patentansprüche**

1. Verfahren zum Messen der Korrosionsgeschwindigkeit einer metallischen Einrichtung durch Testen einer Probe aus dem gleichen Metall wie jenem der Einrichtung auf das Vorliegen von lokalen Korrosionen mit einer Testanordnung, die eine Testelektrode, eine Bezugselektrode und eine Gegenelektrode aufweist und durch getrenntes Bestimmen der Anoden- und Kathodenströme, umfassend die Stufen des Ablesens zuerst des Wertes für den der Probe aufgedrückten Kathodenstrom und dann des Wertes des aufgedrückten Anodenstroms, wobei der Kathodenstrom bzw. der Anodenstrom progressiv mit einem logarithmischen Anstieg auf die Probe aufgedrückt werden, die in eine in der zu testenden Anordnung gebildete Öffnung eingesetzt ist, bei Progressionszeiten von 30 s bis 10 min, wobei die anodische Polarisation niemals 200 mV übersteigt und wobei die Korrosionsgeschwindigkeit, ausgedrückt in Millimeter pro Jahr, nach

der Beziehung:

$$P = \frac{AW \; 3{,}268{.}10^{-3} \; I \; k}{d \cdot e}$$

berechnet wird, worin:

AW das Atomgewicht des Metalls der Probe darstellt, e die Anzahl der im Metallauflösungsprozeß involvierten Elektronen ist, d die Metalldichte in $g/cm^3$ bedeutet und I.k den Austauschstrom, in $\mu A/cm^2$, bedeutet, berechnet nach der Beziehung:

$$\frac{Ia \cdot Ic}{Ia + Ic} \; ,$$

worin Ia bzw. Ic die Stromdichten des periodisch aufgedrückten anodischen bzw. kathodischen Stromes sind.

2. Elektrochemischer Sensor zum Messen der Korrosion in einer metallischen Einrichtung nach dem Verfahren gemäß Anspruch 1, umfassend eine Probe (1) aus dem gleichen Metall wie dem der zu testenden Einrichtung, eine Bezugselektrode (8) und eine Gegenelektrode (4), welche Bezugselektrode (8) an einem Drahtleiter (3) befestigt ist, der in einer Isoliermaterialmasse eingebettet ist, und wobei die Probe (1) und die Gegenelektrode (4) mit einer Gleichstromquelle verbunden sind, dadurch gekennzeichnet, daß eine rohrförmige Testelektrode (2), die aus dem gleichen Metall wie jenem der Einrichtung besteht, derart angeordnet ist, daß der genannte Drahtleiter (3) darin aufgenommen ist; daß sich die Gegenelektrode (4) innerhalb und in Längsrichtung dieser rohrförmigen Testelektrode (2) erstreckt und elektrisch von den übrigen Elektroden isoliert ist; daß die Probe (1) ein ovalförmiger Ring ist, der sowohl mechanisch als auch elektrisch mit der rohrförmigen Testelektrode in Verbindung steht; daß die Bezugselektrode (8) nahe zum Bodenteil der Ovalring-Probe angeordnet ist; daß die Gleichstromquelle mit Einrichtungen zur Lieferung von zuerst einem kathodischen und dann einem anodischen Strom mit einem logarithmischen Anstieg ausgestattet ist, und daß die Probe (1) und die Bezugselektrode (8) mit einem Elektrometer verbunden sind, das Polarisationspotentiale feststellen kann.

3. Elektrochemischer Sensor nach Anspruch 2, worin das Metall für die Bezugselektrode (8) unter Silber/Festphasen-AgCl, Pt, Platin-beschichtetem Ti, Zr, In, Os, Au, Graphit, Rutheniumoxid-beschichtetem Ti und Pd ausgewählt ist.

4. Elektrochemischer Sensor nach Anspruch 2, worin die Bezugselektrode (8) ein mit geschmolzenem AgCl imprägniertes Silberdrahtnetz ist und ihr Drahtleiter ein Silberdraht (3) ist.

5. Elektrochemischer Sensor nach Anspruch 2, worin das Material für die Gegenelektrode (4) unter Pt, Pt-beschichtetem Ti, Zr, In, Os, Au, Graphit, Rutheniumoxid-beschichtetem Ti und Pd ausgewählt ist.

6. Elektrochemischer Sensor nach Anspruch 2, worin die Gegenelektrode (4) ein Platindraht ist.

7. Elektrochemischer Sensor nach Anspruch 2, worin der Endteil der Gegenelektrode (4) schneckenförmig um einen Isolator (7) gewunden ist, der den Endteil des Leiterdrahtes (3) umgibt, der direkt mit der Bezugselektrode (8) elektrisch verbunden ist.

8. Verwendung des Sensors nach Anspruch 2 zum Messen, ohne Aufdrücken irgendeines Stromes auf diesen Sensor, der Spontanpotentiale, die ein Hinweis auf das Vorliegen von Korrosionsgefahr sind, die sich in der Probe entwickeln, wenn diese zunächst in eine inhibierte Lösung und dann in eine nicht-inhibierte Lösung getaucht wird.

**Revendications**

1. Procédé de mesure de la vitesse de corrosion d'une installation métallique en testant, pour détecter la présence d'une corrosion localisée, un échantillon fait du même métal que l'installation à vérifier avec un dispositif d'essai comprenant une électrode d'essai, une électrode de référence et une contre-électrode, et en déterminant de façon discontinue les courants anodique et cathodique, ce procédé comprenant les étapes consistant à lire tout d'abord la valeur du courant cathodique appliqué à l'échantillon puis la valeur du courant anodique qui lui est appliqué, les courants anodique et cathodique étant respectivement appliqués à l'échantillon, introduit dans une ouverture formée dans l'installation à vérifier, de façon progressive selon une loi logarithmique, avec des temps de progression compris entre 30 secondes et 10 minutes, la polarisation anodique ne dépassant jamais 200 mV, la vitesse de corrosion, en millimètres annuels, étant calculée grâce à la relation :

$$P = \frac{AW\ 3{,}268 \times 10^{-3}\ I.k}{de}$$

dans laquelle :

AW est la masse atomique du métal de l'échantillon,

e est le nombre d'électrons impliqués dans le processus de dissolution du métal,

d est la masse volumique du métal en g/cm$^3$, et

I.k est le courant d'échange, en $\mu$A/cm$^2$, calculé grâce à la relation :

$$\frac{Ia.Ic}{Ia+Ic}$$

dans laquelle Ia et Ic sont respectivement les densités des courants anodique et cathodique appliqués de façon périodique.

2. Capteur électrochimique pour mesurer la corrosion dans une installation métallique avec le procédé revendiqué à la revendication 1, du type qui comprend un échantillon (1), fait du même métal que l'installation à vérifier, une électrode de référence (8) et une contre-électrode (4), ladite électrode de référence (8) étant fixée à un fil conducteur (3) noyé dans une masse de matière isolante et l'échantillon (1) et la contre-électrode (4) étant reliés à un générateur de courant continu, caractérisé en ce qu'une électrode (2) tubulaire d'essai, faite du même métal que l'installation, est disposée de telle sorte que ledit fil métallique (3) y soit contenu, ladite contre-électrode (4) s'étend à l'intérieur et le long de ladite électrode tubulaire d'essai (2) et est isolée électriquement des électrodes restantes, ledit échantillon (1) a la forme d'une bague de forme ovale reliée à la fois mécaniquement et électriquement à ladite électrode d'essai tubulaire, ladite électrode de référence (8) est positionnée au voisinage de la partie inférieure de l'échantillon en forme de bague ovale, ledit générateur de courant continu est équipé d'un moyen pour fournir d'abord un courant cathodique puis un courant anodique selon une progression logarithmique, et en ce que l'échantillon (1) et l'électrode de référence (8) sont reliés à un électromètre capable de détecter des potentiels de polarisation.

3. Capteur électrochimique selon la revendication 2, dans lequel le métal de l'électrode de référence (8) est choisi parmi le couple Ag/AgCl à l'état solide, le Pt, le Ti revêtu de Pt, le Zr, l'In, l'Os, l'Au, le graphite, le Ti revêtu d'oxyde de ruthénium et le Pd.

4. Capteur électrochimique selon la revendication 2, dans lequel l'électrode de référence (8) est un réseau de fil d'argent imprégné de AgCl fondu et son fil conducteur est un fil d'argent (3).

5. Capteur électrochimique selon la revendication 2, dans lequel le matériau de la contre-électrode (4) est choisi parmi le Pt, le Ti revêtu de Pt, le Zr, l'In, l'Os, l'Au, le graphite, le Ti revêtu d'oxyde de ruthénium et le Pd.

6. Capteur électrochimique selon la revendication 2, dans lequel la contre-électrode (4) est un fil de platine.

7. Capteur électrochimique selon la revendication 2, dans lequel la partie terminale de la contre-électrode (4) est enroulée de façon hélicoïdale autour d'un isolant (7) qui entoure la partie terminale du fil conducteur (3) relié électriquement directement à ladite électrode de référence (8).

8. Utilisation du capteur défini à la revendication 2 pour mesurer, sans appliquer de courant audit capteur, les potentiels spontanés indicateurs de la présence d'un risque de corrosion, développé dans l'échantillon d'abord immergé dans une solution inhibée puis dans une solution non inhibée.

# Fig.1

## Fig.2

mV

400 · 200 · 0 · -200 · -400 · -600 · -800 · -1000 · -1200 ·

a

ANODIC

b

CATHODIC

1    10    $10^2$    log µA/cm$^2$

## Fig.3

mV

400 · 200 · 0 · -200 · -400 · -600 · -800 · -1000 · -1200 ·

a

ANODIC

b

CATHODIC

1    10    $10^2$    log µA/cm$^2$

# Fig.4